(19) Europäisches Patentamt
European Patent Office
Office européen des brevets

(11) Veröffentlichungsnummer: **0 302 338**
**A1**

# (12) EUROPÄISCHE PATENTANMELDUNG

(21) Anmeldenummer: **88111934.1**

(22) Anmeldetag: **25.07.88**

(51) Int. Cl.4: **C07C 91/12 , C08G 18/10 , C08G 18/32**

(30) Priorität: **06.08.87 DE 3726049**

(43) Veröffentlichungstag der Anmeldung: **08.02.89 Patentblatt 89/06**

(84) Benannte Vertragsstaaten: **AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Scholl, Hans Joachim, Dr.**
**Am Feldrain 5**
**D-5000 Köln 80(DE)**
Erfinder: **Pedain, Josef, Dr.**
**Haferkamp 6**
**D-5000 Köln 80(DE)**

## (54) 1,5-Diaminoheptanol-6, ein Verfahren zu dessen Herstellung und dessen Verwendung.

(57) Die vorliegende Erfindung betrifft die neue chemische Verbindung 1,5-Diaminoheptanol-6, ein Verfahren zu deren Herstellung aus L-Lysin und deren Verwendung als Kettenverlängerungsmittel bei der Herstellung von Polyurethanen nach dem Isocyanat-Polyadditionsverfahren.

EP 0 302 338 A1

Xerox Copy Centre

## 1,5-Diaminoheptanol-6, ein Verfahren zu dessen Herstellung und dessen Verwendung

Die vorliegende Erfindung betrifft die neue chemische Verbindung 1,5-Diaminoheptanol-6, ein Verfahren zu deren Herstellung aus L-Lysin und deren Verwendung als Kettenverlängerungsmittel bei der Herstellung von Polyurethanen nach dem Isocyanat-Polyadditionsverfahren.

Es wurde die neue chemische Verbindung 1,5-Diaminoheptanol-6 gefunden, die der Formel (I) entspricht.

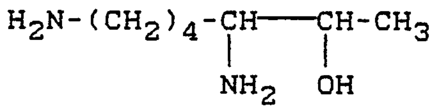
(I).

Es wurde weiterhin ein Verfahren zur Herstellung von 1,5-Diaminoheptanol-6 gefunden, das dadurch gekennzeichnet ist, daß man L-Lysin in freier Form und/oder in seiner HCl-Salz-Form mit Essigsäureanhydrid in Gegenwart einer tertiären organischen Aminbase und unter Zusatz eines 4-Aminopyridin-Derivates gemäß DE-A 3 425 814 zum 1,5-Biasacetaminoheptanon-6 umsetzt. Das so erhältliche Produkt wird zum 1,5-Bisacetaminoheptanol-6 hydriert, nachfolgend durch Hydrolyse in wäßriger Mineralsäure in das Salz des 1,5-Diaminoheptanol-6 überführt und durch Behandlung mit einer starken Base als freies Amin 1,5-Diaminoheptanol-6 isoliert.

Eine beispielhafte Ausführungsform des erfindungsgemäßen Verfahrens wird anhand des folgenden Formelschemas erläutert:

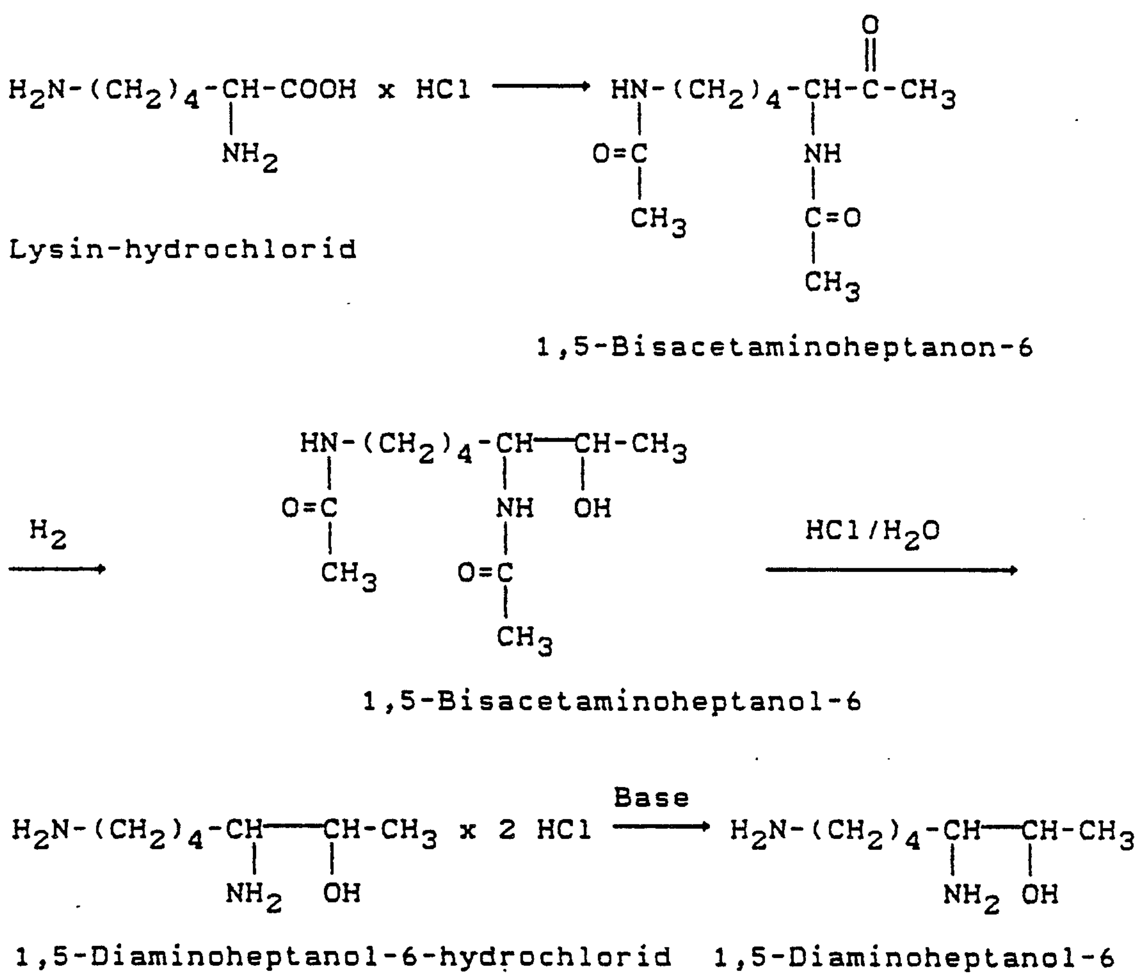

Lysin-hydrochlorid

1,5-Bisacetaminoheptanon-6

1,5-Bisacetaminoheptanol-6

1,5-Diaminoheptanol-6-hydrochlorid

1,5-Diaminoheptanol-6

Das in der ersten Stufe nach DE-A 3 425 814 erhältliche 1,5-Bisacetaminoheptanon-6 wird in der nächsten Stufe des erfindungsgemäßen Verfahrens der an sich bekannten Hydrierung der Ketogruppe zur

Hydroxylgruppe unterworfen; beispielsweise in Wasser als Lösungsmittel unter Verwendung von Raney-Nickel als Hydrierkatalysator bei Temperaturen von etwa 50 bis 150 °C und einem Wasserstoffdruck von etwa 20 bis 50 bar. Selbstverständlich sind auch Rohprodukte der ersten Stufe, von Triethylaminhydrochlorid und niedrig siedenden Anteilen befreit, für die Hydrierstufe verwendbar.

Die so erhältliche wäßrige Lösung von 1,5-Bisacetaminoheptanol-6 wird, vorzugsweise nach Abtrennung des Katalysators, direkt der Hydrolyse in saurer Lösung (insbesondere in Mineralsäuren) zugeführt. Das 1,5-Bisacetaminoheptanol-6, ein Feststoff (Fp.: 105 bis 107 °C) kann jedoch auch isoliert werden.

Die folgende Stufe des erfindungsgemäßen Verfahrens besteht in der an sich bekannten Hydrolyse (Entacetylierung, vgl. DE-A 3 425 814) der N-Acetylgruppen in wäßriger, mineralsaurer Lösung zu den entsprechenden, primäre Aminogruppen enthaltenden Salzen des 1,5-Diaminoheptanol-6, beispielsweise in 4 bis 6 normaler, wäßriger Salzsäurelösung durch 4- bis 6-stündiges Erhitzen unter Rückflußbedingungen. Nachfolgendes Einengen und Umkristallisieren führt zu gereinigten Salzen des 1,5-Diaminoheptanol-6. Ihre Umsetzung mit NaOH oder KOH aus konzentrierten wäßrigen Lösungen führt zum reinen, freien Amin, das jedoch auch unter Umgehung der Aminsalz-Isolierung direkt mit NaOH oder KOH als Rohamin abgeschieden werden kann. Eine weitere Reinigung ist durch Destillation möglich.

Das erfindungsgemäße 1,5-Diaminoheptanol-6 ist eine bei Raumtemperatur flüssige Substanz, die keinerlei Kristallisationsneigung erkennen läßt. Herstellungsbedingt handelt es sich um eine reine Diaminoverbindung mit zusätzlicher, benachbarter OH-Funktion, ohne störende Anteile an Monoaminoverbindungen.

Das erfindungsgemäße 1,5-Diaminoheptanol-6 stellt ein neuartiges, spezielles Kettenverlängerungsmittel für die Herstellung von Polyurethankunststoffen nach dem Isocyanat-Polyadditionsverfahren dar, in dem zunächst eine Kettenverlängerung über die beiden Amingruppen vorgenommen werden kann und nachfolgend für weitere Umsetzungen die OH-Funktion zur Verfügung steht.

So gehört es beispielsweise zum Stand der Technik, gelöste Polyurethanpolyharnstoff-Harze linearen Aufbaus auf einem Substrat einer Vernetzungsreaktion mit Hilfe von Melamin- oder Harnstoff-Formaldehydharzen zu unterwerfen. Als Akzeptorgruppen für den Angriff der Methylolgruppierungen dieser Harze dienen die NH-Gruppen aus den Urethan- und Harnstoffgruppen der Polymerkette. Im allgemeinen werden für die Vernetzungsreaktion aber nachteilig hohe Temperaturen von 150 bis 170 °C benötigt, um ausreichende Beständigkeit zu erreichen. Der Einbau von Hydrazin in die Polymerkette oder seitenständigen Amidgruppen (nach DE-A 2 457 387 bzw. DE-A 3 345 071) hat bereits die Möglichkeit aufgezeigt, die Einbrennbedingungen zu verbessern. Der Einbau der erfindungsgemäßen Substanz bedeutet einen weiteren Fortschritt. Entsprechende Polyurethanpolyharnstoffe lassen sich unter sehr milden Bedingungen mit Formaldehydharzen vernetzen. Sie sind auch bei der Verwendung von NCO-Gruppen-inerten Lösungsmittelgemischen gegenüber Polyisocyanaten sehr reaktiv und können durch Zumischen eines Polyisocyanats auf beliebigen Substraten wie Metall, Kunststoff, Papier oder Holz in vernetzte, d.h. gegenüber Chemikalien resistente Filme überführt werden.

Die vorliegende Erfindung soll anhand der folgenden Beispiele noch näher erläutert werden (%-Angaben beziehen sich auf Gew.-%).

## Beispiele

### Beispiel 1a

(Herstellung von 1,5-Bisacetaminoheptanon-6)

In eine Mischung aus 3676 g Essigsäureanhydrid, 2429 g Triethylamin und 2,4 g N,N-Dimethyl-4-amino-pyridin werden bei 40 bis 50 °C portionsweise 1096 g L-Lysin-hydrochlorid unter Rühren eingetragen. Nachdem ca. 80 1 $CO_2$ entwichen sind, wird solange bei 60 bis 70 °C nachgerührt, bis insgesamt ca. 135 1 $CO_2$ abgespalten wurden. Man filtriert vom ausgefallenen Triethylaminohydrochlorid ab, befreit das Filtrat im Vakuum von niedrigsiedenden Anteilen und kristallisiert das verbleibende Rohprodukt aus Essigester. Man erhält 1163 g 1,5-Bisacetaminoheptanon-6 vom Fp. 108-110 °C.

### Beispiel 1b

(Herstellung von 1,5-Diaminoheptanol-6)

a) In einem Rührautoklav werden 456 g 1,5-Bisacetaminoheptanon-6 in 1,5 1 Wasser gelöst und mit 50 g Raney-Nickel versetzt. Bei 90° c und 40 bis 60 bar Wasserstoffdruck wird bis zum Ende der Wasserstoffaufnahme gerührt. Anschließend wird entspannt, vom Katalysator abfiltriert und die wäßrige Lösung von 1,5-Bisacetaminoheptanol-6 direkt der sauren Hydrolyse zugeführt.

b) Die wäßrige Lösung aus a) wird mit 1,5 kg 37 %iger Salzsäure versetzt, 6 Stunden unter Rückflußbedin gungen gehalten und nachfolgend im Vakuum von niedrigsiedenden Anteilen befreit. Das erhaltene Rohprodukt 1,5-Diaminoheptanol-6-bishydrochlorid wird nachfolgend unter Kühlung mit 480 g 50 %iger Natronlauge versetzt. Man trennt vom entstandenen Natriumchlorid und überschüssiger Natronlauge ab und reinigt das so isolierte Rohamin, das lediglich nichtdestillierbare Verunreinigungen und geringe Anteile an Wasser enthält, durch Destillation. Auf diese Weise können 251 g 1,5-Diaminoheptanol-6 als bei 113 bis 115° C/0,1 mbar siedende Substanz erhalten werden (Ausbeute 86 %).

| Analyse (%): | | | |
|---|---|---|---|
| | C | H | N |
| gefunden | 57,4 | 12,5 | 19,1 |
| Theorie | 57,5 | 12,3 | 19,2 |
| (bezogen auf $C_7H_{18}N_2O$) | | | |

Beispiel 1c

(Herstellung von 1,5-Diaminoheptanol-6-bishydrochlorid)

Das gemäß Beispiel 2a,b) hergestellte Rohprodukt 1,5-Diaminoheptanol-6-bishydrochlorid wird in 800 ml Isopropanol ausgefällt. Man saugt ab, wäscht mit wenig Isopropanol nach, trocknet und erhält 416 g 1,5-Diaminoheptanol-6-bishydrochlorid vom Fp. 144-147° C (Zers.).

| Analyse (%): | | | | |
|---|---|---|---|---|
| | C | H | N | Cl |
| gefunden | 38,2 | 9,3 | 12,8 | 32,0 |
| Theorie | 38,4 | 9,1 | 12,8 | 32,4 |
| (bezogen auf $C_7H_{18}N_2O$ x 2 HCl) | | | | |

Biespiel 1d

(Herstellung von 1,5-Diaminoheptanol-6)

In 480 g 50 %ige Natronlauge werden unter Rühren und Eiskühlung 438 g Bishydrochlorid gemäß Biespiel 3 portionsweise eingetragen. Man trennt von entstandenem Natriumchlorid und überschüssiger Natronlauge ab und erhält ein Rohamin, das nach gaschromatographischer Analyse im Hochsiedebereich keine Verunreinigungen zeigt und lediglich geringe Mengen an Wasser und Salzen aufweist. Durch Destillation lassen sich entsprechend Beispiel 2b) 265 g 1,5-Diaminoheptanol-6 isolieren.

Beispiel 2

In diesem Beispiel wird die Verwendung der erfindungsgemäßen Substanz 1,5-Diaminoheptanol-6 zur Herstellung eines Polyurethanpolyharnstoffs beschrieben.

Dazu wird aus 2550 g (1,0 Mol) eines linearen Polyesters, der aus Diethylenglykol und Adipinsäure besteht und der eine OH-Zahl von 44 hat, 333 g (1,5 Mol) 3,3,5-Trimethyl-5-isocyanatomethylcyclohexylisocyanat und 84 g (0,5 Mol) 1,6-Hexandiisocyanat bei 110 °C in der Schmelze in 3 Stunden ein NCO-Prepolymer hergestellt und dieses in 1500 g Toluol aufgelöst. Zu dieser Lösung tropft man nun bei 0 bis 20 °C die Lösung von 146 g (1,0 Mol) 1,5-Diaminoheptanol-6 (aus Beispiel 1b) in 600 g Isopropanol. Man erhält eine viskose Lösung, die mit weiteren 500 g Isopropanol und 500 g Methoxypropanol auf eine Konzentration von ca. 50 % eingestellt wird. Die Lösung hat eine Viskosität von 43.000 mPa.s/23 °C (Lösung L 1).

Im Vergleich hierzu wird aus dem gleichen NCO-Prepolymer in den gleichen Lösungsmitteln eine ca. 50 %ige Lösung eines Polyurethanharnstoffs hergestellt, in der an Stelle des erfindungsgemäßen Diamins Ethylendiamin eingesetzt wurde (Lösung L 2).

Zu je 1000 g der Lösungen L 1 und L 2 gibt man 80 g eines 50 %ig in n-Butanol gelösten Formaldehyd-Melaminharzes (Melaminhexamethylolether) als Vernetzer und 4,5 g p-Toluolsulfonsäure als Katalysator.

Die Lösungen werden in einem Auftrag von 150 g/m² auf ein Trennpapier gestrichen und 15 min bei 120 °C ausgeheizt.

Dabei entstehen weiche aber trockene Filme. Zur Prüfung der Vernetzung legt man einen mit Isopropanol getränkten Wattebausch 5 min auf die Filme. Der Film aus der Lösung L 1 bleibt unverändert, der Film aus der Lösung L2 wird klebrig und löst sich auf.

Aufgrund der damit gezeigten hohen Reaktivität der Lösung L 1 gegenüber Melaminformaldehydharzen ist diese Lösung im Gegensatz zur Vergleichslösung L 2 hervorragend geeignet als Haftvermittler bei Beschichtungen und für Grundierungen, die bei milden Bedingungen vernetzt werden sollen.

Da sich die Lösungen, die die erfindungsgemäße Substanz enthalten, schon bei 120 °C und darunter aushärten lassen, ergibt sich eine wesentliche Verbesserung gegenüber dem bekannten Stand der Technik.

## Ansprüche

1. 1,5-Diaminoheptanol-6 der Formel

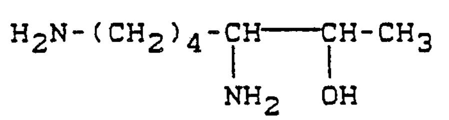

(I).

2. Verfahren zur Herstellung von 1,5-Diaminoheptanol-6, dadurch gekennzeichnet, daß man L-Lysin in freier Form und/oder in seiner HCl-Salz-Form mit Essigsäureanhydrid in Gegenwart einer tertiären organischen Aminbase und unter Zusatz eines 4-Aminopyridin-Derivates umsetzt, das so gebildete 1,5-Bisacetaminoheptanon-6 zum 1,5-Biasacetaminoheptanol-6 hydriert und nachfolgend aus dem durch saure Hydrolyse gebildetem 1,5-Diaminoheptanol-6-Salz einer Mineralsäure das freie Amin durch Behandlung mit einer starken Base isoliert.

3. Verfahren nach Anspruch 2, dadurch gekennzeichnet, daß man die durch saure Hydrolyse des 1,5-Bisacetaminoheptanol-6 entstehenden Salze des 1,5-Diaminoheptanol-6 zunächst isoliert und nachfolgend mit starken Basen behandelt.

4. Verwendung des 1,5-Diaminoheptanol-6 als alleiniges oder anteiliges Kettenverlängerungsmittel bei der Herstellung von Polyurethankunststoffen nach dem Isocyanat-Polyadditionsverfahren.

Europäisches Patentamt

# EUROPÄISCHER RECHERCHENBERICHT

Nummer der Anmeldung

EP 88 11 1934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 523 003 (R.S. BEZWADA)<br>* Spalte 7, Zeilen 44,45; Spalte 12, Ansprüche 1,8 *<br>----- | 1,4 | C 07 C 91/12<br>C 08 G 18/10<br>C 08 G 18/32 |
| | | | **RECHERCHIERTE SACHGEBIETE (Int. Cl.4)** |
| | | | C 07 C 91<br>C 07 G 18 |

Der vorliegende Recherchenbericht wurde für alle Patentansprüche erstellt

| Recherchenort | Abschlußdatum der Recherche | Prüfer |
|---|---|---|
| DEN HAAG | 16-09-1988 | SANCHEZ Y GARCIA J.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)